# EUROPEAN PATENT APPLICATION

(11) **EP 4 636 650 A1**
(43) Date of publication of application: **22.10.2025**
(21) Application number: 24170362.8
(22) Date of filing: 15.04.2024
(51) Int. Cl.: G06N 3/0475, G06N 3/0985, G06N 5/01

(54) **DYNAMIC DETERMINATION OF INFERENCE-TIME PARAMETERS**

(71) Applicant: SAP SE, 69190 Walldorf (DE)
(72) Inventor: KREBS, Rouven, D-69190 Walldorf (DE)
(74) Representative: DeltaPatents B.V.

(57) **Abstract**

Some embodiments are directed to a method for dynamic determination of inference-time parameters to control the stochastic generation process of a generative neural network. The method may include dynamically determining for an inference request, at least from operational context information, at least one of the inference-time parameters.

## Description

### TECHNICAL FIELD

The presently disclosed subject matter relates to a method for dynamic determination of inference-time parameters, a system for dynamic determination of inference-time parameters, and a computer storage medium.

### BACKGROUND

The field of machine learning has seen significant advancements, with technologies now integrating into commercial solutions. Artificial Neuronal Networks, for instance, can easily generate text or image outputs. Large Language Models (LLMs) have proven adept at structuring, summarizing, and interpreting long texts or data inputs. Furthermore, LLMs are used to generate programming code in a variety of programming languages. Likewise, image generation is applied in a range of projects, e.g., generation of synthetic test data and training data.

Utilizing a generative neural network, such as a Large Language Model, requires the configuration of inference-time parameters (sometimes referred to as meta-parameters) to control the characteristics of the models' responses. For example, a commonly employed parameter is the sampling temperature. Higher values, such as 0.8, will make the output more random, while lower values, like 0.2, will make it more deterministic. There are many other parameters that can be used to control the generation of output in a generative neural network.

Currently, the setting of inference-time parameters, including those that define the behavior of the output such as sampling temperature, prompt weighting, and maximum token count, is done directly in the call to the model or configured beforehand by the system or application making the call. This places the responsibility for determining the appropriate inference-time parameters at the caller.

Having suitable inference-time parameters is important because suboptimal inference-time parameters may lead to outputs that are unsatisfactory or even incorrect. Setting these parameters requires an understanding of the model's behavior, which is challenging for non-experts. Moreover, as the same generative neural network may be used for a variety of different applications, inference-time parameters may have to change from call to call.

Accordingly, there is a need for a system that determines inference-time parameters.

### SUMMARY

It would be advantageous to have an improved way to set inference-time parameters for a generative neural network.

A method for dynamic determination of inference-time parameters, a system for dynamic determination of inference-time parameters, and a computer storage medium are described in the accompanying claims. Specific embodiments of the invention are set forth in the dependent claims.

An embodiment of a method for dynamic determination of inference-time parameters to control the stochastic generation process of a generative neural network, may include dynamically determining for an inference request, at least from operational context information, at least one of the inference-time parameters. The inference request may be for a request for application of a generative neural network on an input, sometimes referred to as a prompt. Generative neural network produces outputs using a stochastic generation process which is controlled by the one or more inference-time parameters.

Once the inference-time parameters are determined, the output data is generated by the generative neural network controlled at least by the determined at least one of the inference-time parameters.

A system for determining inference-time parameters may be an electronic device, e.g., a computer. A further aspect is a method for determining inference-time parameters. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into a server, and when the computer program is available for downloading from such a server.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows an example of an embodiment of generative neural network request system,
Figure 1b schematically shows an example of an embodiment of generative neural network request system,
Figure 2 schematically shows an example of an embodiment of generative neural network request system,
Figure 3 schematically shows an example of an embodiment of generative neural network request system,
Figure 4 schematically shows an example of an embodiment of generative neural network method,
Figure 5a schematically shows a computer readable medium having a writable part comprising a computer program according to an embodiment,
Figure 5b schematically shows a representation of a processor system according to an embodiment.

### Reference signs list

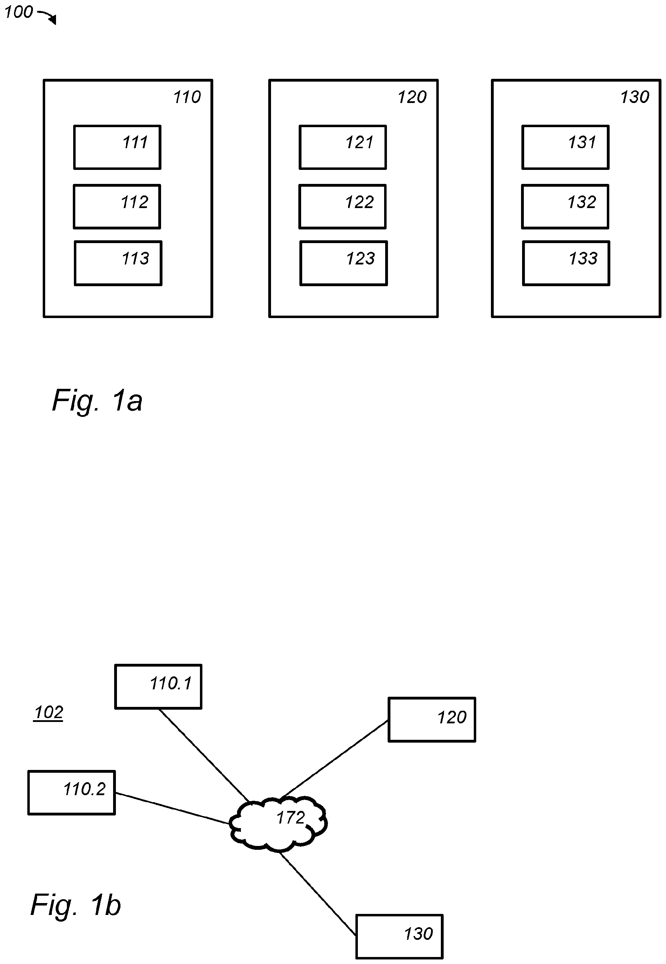

The following list of references and abbreviations corresponds to figures 1a-3, 5a-5b, and is provided for facilitating the interpretation of the drawings and shall not be construed as limiting the claims.
- 100, 102: generative neural network request system
- 110: client device
- 110.1, 110.2: client device
- 120: configurator device
- 130: generative neural network device
- 111: a processor system
- 112: storage
- 113: a communication interface
- 121: a processor system
- 122: a storage
- 123: a communication interface
- 131: a processor system
- 132: a storage
- 133: a communication interface
- 172: a computer network
- 200: generative neural network request system
- 211: an inference request
- 212: operational context information
- 230: neural network request
- 231: a generative neural network input
- 232: inference-time parameters
- 300: generative neural network request system
- 301: application system
- 302: configuration system
- 303: generative neural network system
- 310: first application
- 311: generative neural network input
- 312: a data collector
- 313: request data
- 314: history data
- 315: configuration data
- 316: second application
- 320: configurator application
- 321: inference-time parameters
- 340: generative neural network request
- 330: generative neural network system application
- 331: generative neural network system result
- 1000, 1001: a computer readable medium
- 1010: a writable part
- 1020: a computer program

- 1110: integrated circuit(s)
- 1120: a processing unit
- 1122: a memory
- 1124: a dedicated integrated circuit
- 1126: a communication element
- 1130: an interconnect
- 1140: a processor system

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

The field of machine learning has seen significant advancements, with technologies now integrating into commercial solutions. Artificial Neuronal Networks, for instance, can easily generate text or image outputs. Large Language Models (LLMs) have proven adept at structuring, summarizing, and interpreting long texts or data inputs. Furthermore, LLMs are used to generate programming code in a variety of programming languages. Likewise, image generation is applied in a range of projects, e.g., generation of synthetic test data and training data.

However, utilizing a Large Language Model still necessitates the configuration of inference-time parameters (sometimes referred to as meta-parameters) to control the characteristics of the models' responses. For example, a commonly employed parameter is the sampling temperature. Higher values, such as 0.8, will make the output more random, while lower values, like 0.2, will make it more deterministic. There are many other parameters that can be used to control the generation of output in a generative neural network.

The appropriate parametrization depends on the specific use case. For instance, a temperature value of 0.1 might be suitable for summarizing technical data, e.g., measured from a manufacturing process, whereas a higher temperature could be preferable for text completions that require more creativity, e.g., generating computer code to solve a particular programming problem.

Especially in digital assistants and other chat-like environments, the intent of the end user can vary widely among these examples. Consequently, there is a need to devise a solution that overcomes the limitations of fixed inference-time parameter values, which can lead to suboptimal experiences and, in some instances, incorrect results.

There is no established state of the art addressing this issue. Rather than relying on hardcoded parameters for an LLM completion, embodiments calculate inference-time parameters in real-time during execution, depending on the particular request possibly other available context.

**Figure 1a** schematically shows an example of an embodiment of a generative neural network request system 100. Shown is a client device 110, configuration device 120, and generative neural network device 130, which may be part of a generative neural network request system 100.

Client device 110 is configured to make an inference request for a generative neural network. For example, client device 110 may run an application for computer code generation; For example, so-called AI pair programming
In AI pair programming artificial intelligence is integrated within the development environment to assist programmers by offering real-time code suggestions, completing functions, code review, and/or generating documentation. Other applications are possible, and further examples are given herein.

Configuration device 120 is configured to dynamically determine one or more of inference-time parameters that control the stochastic generation process of a generative neural network. Whereas conventionally, the inference-time parameters are fixed, or are set by the calling application, configuration device 120 determines inference-time parameter(s) for a particular inference request. For example, one or more inference-time parameters are determined at inference-time. For example, one or more inference-time parameters are determined after receiving an inference request. Determining one or more inference-time parameters may comprise selecting the one or more inference-time parameters from multiple different one or more inference-time parameters, e.g., selecting a set of inference-time parameters from multiple sets of inference-time parameters. Determining one or more inference-time parameters may comprise applying a heuristic or a machine-learnable model to a generative neural network input, e.g., a prompt, and/or to a request context, e.g., information relating to an inference request.

Inference-time parameters should be distinguished from the trained neural network parameters themselves. The neural network parameters are not dynamically determined for a new inference request, but stay constant from request to request. Neural network parameters are determined in a training phase, while in a later inference phase the inference-time parameters are determined. Inference-time parameters control how neural network computations are performed and used, while the neural network parameters determine what the content of the neural network computations.

Generative neural network device 130 is configured to generate output data from the generative neural network using inputs derived from the inference request. The generation process being controlled by the determined inference-time parameter(s). For example, generative neural network device 130 may run an LLM (large language model) or an image generator, e.g., a diffusion model.

Client device 110, configurator device 120, and generative neural network device 130 may be part of generative neural network request system 100. They may each be separate devices, e.g., connected through a computer network. Some of the devices may be combined however; For example, Client device 110 and configurator device 120 may be combined into one device; For example, configurator device 120, and generative neural network device 130 may be combined into one device. For example, client device 110, configurator device 120, and generative neural network device 130 could all three be combined into one device.

Client device 110 may comprise a processor system 111, a storage 112, and a communication interface 113. Configuration device 120 may comprise a processor system 121, a storage 122, and a communication interface 123. Generative neural network device 130 may comprise a processor system 131, a storage 132, and a communication interface 133.

In the various embodiments of communication interfaces 113, 123 and/or 133, the communication interfaces may be selected from various alternatives. For example, the interface may be a network interface to a local or wide area network, e.g., the Internet, a storage interface to an internal or external data storage, an application interface (API), etc.

Storage 112, 122 and 132 may be, e.g., electronic storage, magnetic storage, etc. The storage may comprise local storage, e.g., a local hard drive or electronic memory. Storage 112, 122 and 132 may comprise non-local storage, e.g., cloud storage. In the latter case, storage 112, 122 and 132 may comprise a storage interface to the non-local storage. Storage may comprise multiple discrete sub-storages together making up storage 112, 122, 132.

Storage 112, 122 and 132 may be non-transitory storage. For example, storage 112, 122 and 132 may store data in the presence of power such as a volatile memory device, e.g., a Random Access Memory (RAM). For example, storage 112, 122 and 132 may store data in the presence of power as well as outside the presence of power such as a non-volatile memory device, e.g., Flash memory. Storage may comprise a volatile writable part, say a RAM, a non-volatile writable part, e.g., Flash. Storage may comprise a non-volatile non-writable part, e.g., ROM.

The devices 110, 120 and 130 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 110, 120 and 130 may comprise a connection interface which is arranged to communicate within generative neural network request system 100 or outside generative neural network request system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., an inference request, and output data of the generative neural network. The communication interface 123 may be used to send or receive digital data, e.g., an inference request, control data for the generative neural network. The communication interface 133 may be used to send or receive digital data, e.g., control data and output data.

Client device 110, configuration device 120, and generative neural network device 130 may have a user interface, which may include well-known elements such as one or more buttons, a keyboard, display, touch screen, etc. The user interface may be arranged for accommodating user interaction for performing an inference request.

The execution of devices 110, 120 and 130 may be implemented in a processor system. The devices 110, 120 and 130 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110, 120 and 130 may comprise multiple processors. A processor circuit may be implemented in a distributed fashion, e.g., as multiple sub-processor circuits. For example, devices 110, 120 and 130 may use cloud computing.

Typically, the client device 110, configuration device 120, and generative neural network device 130 each comprise one or more microprocessors which execute appropriate software stored at the device; for example, that software may have been downloaded and/or stored in a corresponding memory, e.g., a volatile memory such as RAM or a non-volatile memory such as Flash.

Instead of using software to implement a function, the devices 110, 120 and/or 130 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, client device 110, configuration device 120 and generative neural network device 130 may comprise circuits, e.g., for cryptographic processing, and/or arithmetic processing.

In hybrid embodiments, functional units are implemented partially in hardware, e.g., as coprocessors, e.g., neural network coprocessors, and partially in software stored and executed on the device.

**Figure 1b** schematically shows an example of an embodiment of generative neural network request system 102. Generative neural network request system 102 may comprise multiple client devices; shown are client devices 110.1 and 110.2. System 102 may comprise one or more configuration devices; shown is configuration device 120. System 102 may comprise one or more generative neural network devices; shown is generative neural network device 130. The devices are connected through a computer network 172, e.g., the Internet. The client device 110 and configuration device 120 may be according to an embodiment.

For example, multiple client devices, e.g., client devices 110.1 and 110.2, may make requests to a single generative neural network 130. They may do so through a single configuration device 120. The multiple client devices may make requests of multiple generative neural networks, e.g., different ones, depending on the request. This request may be provided with inference-time parameter by the same configuration device 120, though multiple configuration devices could be used as well.

Below several further optional refinements, details, and embodiments are illustrated.

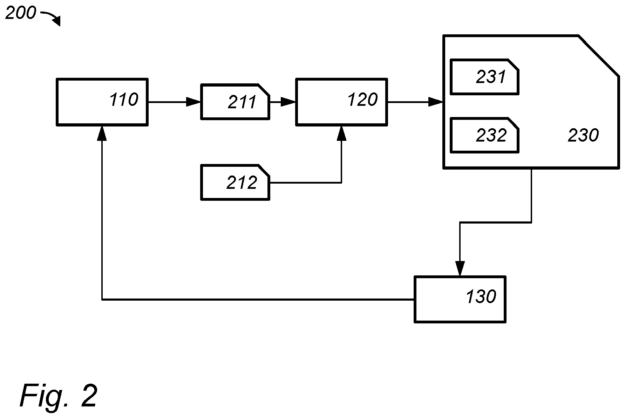

**Figure 2** schematically shows an example of an embodiment of generative neural network request system 200. Generative neural network request system 200 comprises a client device 110, a configurator device 120, and a generative neural network device 130, e.g., in an embodiment as described with reference to figures 1a-1b.

Client device 110 is configured to issue an inference request 211, also referred to as a completion request. The inference request typically comprises a prompt.

A prompt may comprise a textual input given to a generative neural network, such as a Large Language Model or Image model. The prompt specifies the desired output of the neural network.

Inference request 211 may comprise an optional system role. The system role is a typically textual input given to a generative neural network, typically as part of the prompt that specifies the intended behavior or function of the model. For example, a system role may be assistant, content creator, translator, etc.

Inference request 211 may also indicate which generative neural network to use, e.g., in case there is more than one, or which version to use.

Inference request 211 may also set part of the inference-time parameters, leaving the remainder of the inference-time parameters to be set by configurator device 120.

Configurator device 120 is configured to receive or otherwise intercept inference request 211. In addition, configurator device 120 may receive operational context information 212. The operational context information 212 indicates the context in which request 211 was made. Information 212 may comprise, e.g., a caller identification, a caller application, etc.

Operational context information 212 may be collected by a context collector running on client device 110 that is configured to collect information describing the context in that the LLM call is executed. For example, in an embodiment, client device 110 may be configured to run a first application configured to generate the inference request 211, and a second application to collect context information 212. Both are provided to configurator device 120.

Based on the inference request 211, and optionally the context information, configuration device 120 determines inference-time parameter(s) 232. Configuration device 120 may generate a neural network request 230 comprising input data 231, e.g., a prompt, e.g., a system role, and inference-time parameters 232. Inference-time parameters 232 are at least in part dynamically determined for this particular inference request.

Neural network request 230 is provided to generative neural network device 130 for processing. Generative neural network device 130 processes neural network request 230; for example, a generative neural network is executed using generative neural network input 231, e.g., a prompt, as input, and using inference-time parameters 232 an inference-time parameters that control the generation process of the neural network. The output of the neural network is provided to client device 110, e.g., to the first application.

For example, generative neural network device 130 may retrieve the neural network parameters from storage, e.g., local or cloud storage, which is typically external to configuration device 120. Generative neural network device 130 then applies the neural network defined by the neural network parameters on the input 231 received from configuration device 120 controlled by the inference-time parameters, also received from configuration device 120.

For example, in an embodiment the following operations may be executed in a sequence, here described in the context of an LLM. Some operations may be executed in parallel.
1. A first application requires an LLM call.
2. A second application collects further information describing the context in that the LLM call is executed.
3. The configurator device may optionally obtain further context information. In some implementations in which no system role is provided it may also add a system role.
4. The configurator device determines inference-time parameters.
5. The LLM triggered by the Configurator device executes the completion or any other LLM task.
6. The response from the LLM is sent back to the first application and is further processed there.

The use of a second application for collecting context is optional. For example, context may be collected by the configurator device, without further supported from the client device.

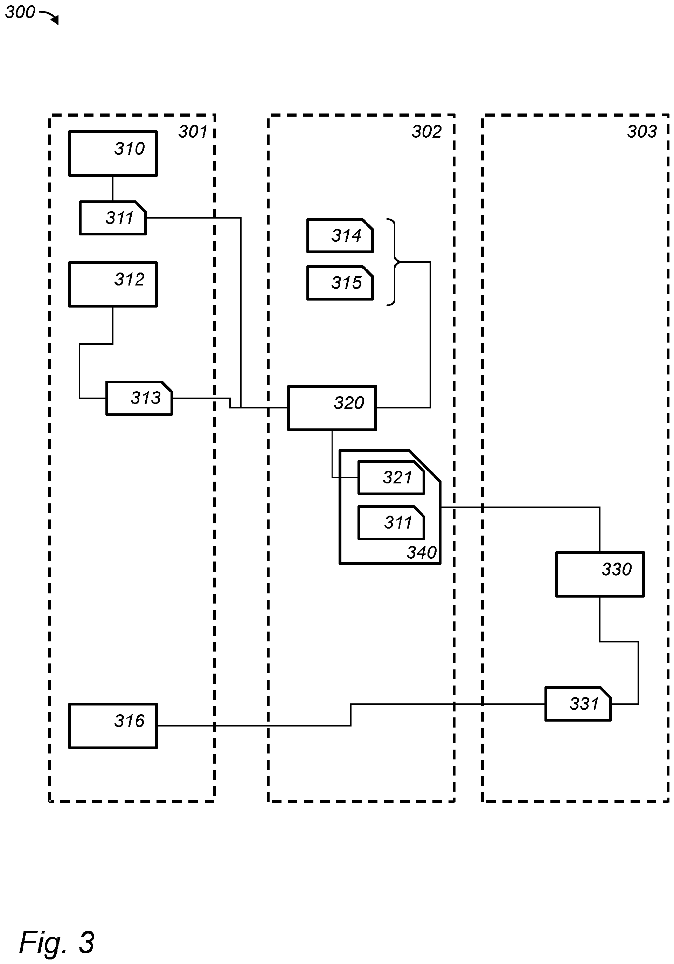

**Figure 3** schematically shows an example of an embodiment of generative neural network request system 300. Figure 3 is an activity diagram depicting a possible flow between the components. For example, the process of figure 3 may be executed on a system such as system 100, 102 or 200.

Generative neural network request system 300 comprises an application system 301, a configuration system 302, and a generative neural network system 303.

Application system 301 comprises a first application 310. First application 310 is configured to generate an input 311 for a generative neural network, e.g., a prompt, e.g., a specification of the desired output to be generated by the generative neural network. A prompt can have different modalities. For example, the neural network input, e.g., the prompt may be one of the following a list, or a combination thereof:
Textual Prompts: Descriptive text, instructions, or queries used to guide the output of the network. This can range from generating written content, answering questions, or creating images based on a description in the prompt. Textual prompts are a typical form applicable across a wide range of domains from media creation to code generation.
Visual Inputs: An image can serve as a prompt for tasks such as style transfer, content modification, or generating images that are contextually related or complete a visual sequence. This enables applications in test data generation, synthetic training data generation, content editing, etc.
Audio Inputs: Sound clips can be used to prompt networks for generating related audio content, transcribing speech to text, producing visual representations of the sound, style transfer. This enables applications in test data generation, synthetic training data generation, audio editing, etc.
Structured Data Inputs: Inputs in the form of structured data, such as lists of values or specific parameter configurations, e.g., according to a format, can direct the generation process with a high degree of precision. This format may be used in applications requiring tailored outputs, like generating text or images that adhere to specifications, synthesizing audio with specific properties, or creating content that matches defined patterns or criteria.

For example, first application 310 may be part of business logic with some need for neural network inference, e.g., completion. First application 310 may be executed and create a prompt. First application 310 may optionally also define a system role. The system role is typically part of the prompt, but could be a separate input to the generative neural network. A system role could be provided downstream, e.g., by the configuration system 302, e.g., configuration application 320.

The generative neural network input 311 is provided to configurator application 320 in configuration system 302, further described below. The prompt may be modified downstream, e.g., by the configuration system 302, but typically, the generative neural network input 311 will be provided to a generative neural network as is.

For example, first application 310 may set part of the inference-time parameters. For example, first application 310 may not set any of the inference-time parameters. Generative neural network input 311, e.g., the prompt, may be part of an inference request for a generative neural network, sent from first application 311 to configurator application 320. The inference request may comprise input 311, and/or optionally which generative neural network to use, and/or part of the inference-time parameters

Application system 301 may comprise an optional data collector 312. Data collector 312 collects information about the context in which the inference request of first application 311 is made. Such context is helpful for determining inference-time parameters. Request data 313 providing context regarding the inference request is sent to configuration application 320. For example, request data 313 may be sent together with, or associated with, input 311. For example, in an embodiment, first application 310 triggers data collector 312, which in turn collects data and sends it to configuration application 320.

Data collector 312 collects information, e.g., context that helps to later derive inference-time parameters. Examples of context information include:
- user information, e.g., a user identification, user geographic location, and/or personal profile,
- Applications information, e.g., an application identification, application description, application class, e.g., business application, chat, game, etc.
- Target Audience of the generated result retrieved from the business context (customer, internal). An example could be internal in case of an employee's yearly performance letter or customer in case of a business letter creation.
- An identifier identifying the business scenarios
- The location in the computer code generating the request. Call stack information.

In an embodiment, data collector 312 collects environmental parameters; for example, real-time metrics from the user's environment, such as time of day, computing device specifications (CPU, GPU capabilities), and network conditions (latency, bandwidth). These parameters can influence the choice of inference settings to balance response time and quality, especially if the generative neural network runs on the same device as first application 310. In an embodiment, Operational context information comprises environmental parameters indicating computing resource availability for the generative neural network; for example, the generative neural network may run on the same system as the first application.

Data collector 312 on application system 301 collects information and supplies it to a configuration application 320 running on a configuration system 302. In an embodiment, a communication channel is established between first application 310 and data collector 312, e.g., an inter-process communication (IPC) channel. For example, data collector 312 may be configured to collect information from first application 310 using the communication channel. Various IPC methods may be used, e.g., shared memory, sockets, message queues. Message queues may be useful for decoupled communication, allowing first application 310 and data collector 312 to work asynchronously.

Data collector 312 may be configured to collect the context information from first application 310 before sending it to configuration application 320 on configuration system 302. For example, data collector 312 may periodically collect data from first application 310 using the communication channel. This could be event-driven, e.g., triggered by first application 310, or based on polling intervals. Data collector 312 may format or preprocess the data.

First application 310 may send its request 311 independent of data collector 312. This has the advantage of making the configuration process mostly transparent. First application 310 may send its request 311 through data collector 312. This has the advantage that request 311 and data 313 may be combined.

First application 310 and/or data collector 312 may communicate with configuration application 320 through various means. For example, RESTful APIs, e.g., intermittent, stateless communication, may be used, e.g., over an HTTP interface.

Application system 301 may comprise a second application 316, configured to receive the output 331 of neural network 330. Typically, second application 316 and first application 311 are the same, though this is not necessary.

Configurator system 302 will dynamically determine inference-time parameters 321 for the inference request 340. Configurator system 302 is further described below.

Generative neural network system 303 comprises a generative neural network system application 330. Generative neural network system application 330 receives a generative neural network request 340 from configurator application 320. Alternatively, Configurator application 320 may return inference-time parameters 321 to application system 301, e.g., to first application 310, who then includes it in a generative neural network request which is sent directly from application system 301 to generative neural network system 303.

Generative neural network system application 330 is configured to receive a neural network request 340, including an input 311, and inference-time parameters 321.

Various types of generative neural networks may be used in an embodiment. For example, generating of output data by the generative neural network may follow a stochastic process, wherein the determined at least one of the inference-time parameters control generation of the output data. For example, the generation of output data by the generative neural network may follow a stochastic process, e.g., a probabilistic process. For example, the neural network may include randomness in an input. This approach allows for diversity in the generated outputs. For example, the network, based on its learned distributions, may choose from multiple potential next steps or elements at one or more points in the generation process.

For example, an LLM can be probabilistic by employing a mechanism where, for a given context or prompt, it calculates probabilities for each potential next token, e.g., word, selecting one based on these probabilities to construct responses. For example, the LLM may generate a probability distribution for the next token to follow the input. Selecting a token from a set of token may be probabilistic, guided by the probability distribution.

An image generator, such as a diffusion model, can be probabilistic by incorporating random noise into its initial state and iteratively refining this noise towards an image output, guided by the conditions of the input prompt. Similarly, in a GAN (Generative Adversarial Network), randomness is introduced through the generator's input, which receives a random noise vector. The generator then transforms this noise into images.

For example, the generative neural network may be applied iteratively to generate the output data, the iterative application of the generative neural network being modulated by the determined at least one of the inference-time parameters. For example, a neural network may produce multiple intermediate results. A next intermediate result depending on a previous intermediate result. For example, selection of the next intermediate result may be governed by an inference-time parameter.

In an embodiment, the generative neural network in generative neural network system application is a large language model.

Various inference-time parameters may be used to control the generations process of an LLM model, in particular to control to stochastic generation. For example, some of these parameters control the balance between a need for diversity in the outputs, and the tolerance for risk in the solutions proposed. A number of known inference-time parameters include:
Temperature controls the randomness in the prediction distribution. A lower temperature makes the model's outputs more deterministic and likely to repeat more common or likely sequences, reducing variability. A higher temperature increases randomness, leading to more diverse outputs.

Top-k Sampling limits the model's choices to the k most likely next words or tokens. The model randomly samples from this set based on the probabilities of these top k choices. Lower k values concentrate the distribution and reduce variability, making the model's outputs more predictable. Higher values allow for greater variability and creativity in the generated text.

Top-p (Nucleus Sampling) Parameter involves selecting the smallest set of tokens whose cumulative probability exceeds the threshold p and then sampling from this set. This method dynamically adjusts the set of considered tokens based on the context, balancing the trade-off between variability and randomness more finely than top-k sampling.

Classifier-Free Guidance Scale adjusts the influence of the guidance, e.g., a prompt or conditioning signal, on the model's outputs. A higher value can make the model more closely follow the guidance, potentially reducing variability in the context of adhering more strictly to the provided input or condition.

Maximum token account sets the maximum number of tokens that the generative neural network can produce.

Temperature, Top-k, and Top-p parameters directly control the variability of the output by adjusting the selection of a next token. The Classifier-free Guidance Scale, also influences output variability, but does so by defining how closely the model adheres to a provided guidance or condition.

The inference request, e.g., as specified in generative neural network input 311, e.g., in the form of a prompt may be for one of: computer code generation, computer code debugging, technical data summarization, technical data-based predictive maintenance, computer network configuration determination, or technical log file-based security vulnerability detection.

For example, in computer code generation variability control, such as temperature, top-p, top-k can control the novelty of the code generated. A lower temperature makes the model more likely to generate commonly used code patterns, which can be beneficial for generating boilerplate code. A higher temperature encourages less predictable outputs, which might be useful for generating novel code, potentially providing solutions to novel problems.

For example, in computer code debugging a lower temperature is typically preferable because it encourages the model to provide more reliable and conventional solutions to known problems.

For example, in technical data summarization, a moderate temperature can balance between generating concise summaries that capture the essence of the data and maintaining enough variability to cover different aspects of the technical content.

For example, in technical data-based predictive maintenance lower temperatures are preferable to ensure predictions are based on more deterministic and historically reliable patterns.

For example, in computer network configuration determination, a lower temperatures helps generate more standard configurations, while a higher temperature help generate more novel designs.

For example, in technical log file-based security vulnerability detection, a moderate to high temperature might be beneficial here to ensure the model is not overly conservative and can identify potential vulnerabilities that are not strictly within the common patterns.

Clearly, which inference-time parameters are preferable for a particular request depend on the nature of the request. Different inference-time parameters giving better results than others.

In an embodiment, the generative neural network is configured for image generation. For example, generative neural network may be any one of: Generative Adversarial Networks (GANs), Diffusion Models, or a Transformer-based Models (e.g., DALL E). For the latter the same type of inference type parameters apply as for LLMs, e.g., temperature, top-p, top-k, etc. For each of these examples, one could use a classifier-free guidance scale. A classifier-free guidance scale controls adherence to the conditioning signal. For example, higher values keep the image closer to the prompt.

The inference request, e.g., as specified in generative neural network input 311, e.g., in the form of a prompt may be for one of synthetic training data generation, synthetic test data generation, augmented reality image creation, 2d or 3d image reconstruction. For example, training and test data generation may have higher diversity parameters, while image reconstruction may have lower diversity.

A number of additional applications are possible for the generative neural network, e.g., generation of images, video, audio, text, 3D models, molecular structures, synthetic datasets, e.g., synthetic datasets that drawn from the same probability distribution as measured sensor data.

In an embodiment, time and/or memory use depends on the inference-time parameter.

For example, the generative neural network may be configured to generate text, wherein the length of the generated text depends on the determined inference-time parameter.

For example, the generative neural network may be configured to generate images according to a diffusion model, and a number of diffusion steps depends on the determined inference-time parameter.

For example, the generative neural network may be configured to generate images including iterative upscaling, and a number of upscaling steps depends on the determined inference-time parameter.

In general, the size of the output, e.g., resolution, color depths, number of tokens, may depend on or may be determined by an inference-time parameters. In general, the processing time for the output, e.g., a number of processing steps may depend on or may be determined by an inference-time parameters.

Yet a further class of inference-time parameters include penalties for undesired outputs. For example, there may be a penalty for recurring tokens. The output of the generative neural network depends on what is penalized, and how large the penalty is.

Configuration system 302 comprises a configurator application 320 configured to receive inference request 311 for a generative neural network.

Configurator application 320 is configured to dynamically determine an inference-time parameter 321 for use with the input 311. The two may be combined in a generative neural network request 340. Inference-time parameter 321 may control the generation process of the generative neural network.

Configuration system 302 may further receive request data 313, e.g., context information relating to first application 310 and circumstances in which the call was made. Configuration system 302 may further data, for example history data 314, and/or configuration data 315. Request data 313, history data 314, and configuration data 315 are each optional.

The inference request comprises a prompt 311 for use as input to the generative neural network. Configurator application 320 may derive the inference-time parameter from the prompt. Configurator application 320 may take the further information into account as well. For example, the inference-time parameter(s ) may might be derived from at least one context parameter and the prompt. For example, we may have a function f such that inference_param = f(prompt, context).

Request data 313 may comprise one or more of:
- an application identifier identifying an application, e.g., an application ID, software version identifiers, or process stage markers and/or process context from which the inference request is made,
- a client identifier identifying a user of the application making the inference request,
- an output identifier identifying a destination of the generated output data of the generative neural network,
- a geographic identifier identifying the geographic origin of the inference request and/or a geographic destination of the generated output data of the generative neural network.

For example, history data may comprise a history of past interactions between first application 310 and/or system 301 and configuration application 3210. For example, history information may be obtained of past inference requests relevant to the inference request, the at least one of the inference-time parameters being determined from the history information. This history could be specific to various parameters like user, code location, etc.

The history information may comprise the inference-time parameter(s) that were dynamically determined in the past. One way this information may be used is to ensure that the inference-time parameters that are generated now, are close to those generated in the past, e.g., within a bound of the past determined inference-time parameter(s). This is advantageous, since it avoids that the type of response a user gets varies over time. Instead, more consistent inference-type parameters are adopted.

The history data may contain feedback on inference-time parameter(s) that were generated in the past. Determining of new inference-time parameter(s) is corrected in a direction conformant with the feedback information. The feedback is typically generated by a human user; e.g., accepting LLM responses, etc., or comparing a user edited LLM response with the proposed one. This is not necessary though, feedback could also be generated by a neural network, e.g., a neural network of higher sophistication then the neural network that generated the output. This is useful for example, to quickly create a training set for the configuration application to train on, e.g., to tune parameters in a heuristic.

For example, configuration data may comprise information on how the inference-time parameters should be determined. For example, what algorithm is to be used to map information like data 311, 313, and 314 to an inference-time parameter.

For example, the configuration information may set lower and/or upper limits for inference-time parameter(s). Configuration application 320 determines inference-time parameter(s) subject to the configuration information. For example, if an inference-time parameter is determined which is too high or too low according to the configuration information, the inference-time parameter may be determined as the upper limit or lower limit, respectively, of the allowable interval set by the configuration data. This feature allows dynamic generation of inference-time parameters but at the same time avoids that too low or too high parameters are used.

In an embodiment, the inference request is one from a particular sequence of inference requests, the operational context information comprising a sequence identifier identifying the particular sequence among a plurality of sequence of inference requests. For example, in a first application may use a sequence of prompt to achieve a particular goal. For example, a first prompt may be used to classify data. A second prompt may request some data generation based on the classification. For example, a first prompt may request classification of computer source code, e.g., as to the programming language, or the type of application. While a second prompt may request an analysis of the code, e.g., as to security problems. Yet further prompts may request a correction of a found problem, etc. When a particular prompt is received it is useful to known of what sequence of prompts it is part of.

There are various ways in which configuration application 320 may determine an inference-time parameter.

For example, configuration application 320 may map keywords in prompt or context, system roles to a preconfigured set of inference-time parameters. For example, keywords that indicate training data generation may be mapped to different inference-time parameter(s) then keywords indicating code generation. For example, in an embodiment, at least one inference-time parameter is derived from weighting keywords in the prompt, e.g., data 311, or in the prompt and context, e.g., data 313, 314.

For example, configuration application 320 may use a table comprising a hard coded mapping of specific context information within inference-time parameter(s). For example, if a first application is a code generating application, which may be derived from request data 313, then a particular set of inference-time parameter(s) may be looked-up, than if the first application is a program for generation synthetic data. This type of information may follow, e.g., a name of first application 310, or a name of the corresponding business unit, etc.

For example, configuration application 320 may use a heuristic with adjustable weights that determines the inference-time parameter, e.g., by weighing context data features. For example, weights may be modified based on feedback from the user. For example, a heuristic may be trained on a set of desired weights for a set of requests, using a machine learning algorithm, e.g., gradient descent. This may be applied to a simple linear additions of weights of keywords, but also to more advanced algorithm, e.g., a neural network.

For example, configuration application 320 may perform an interpretation of the prompt text itself. For example, such an analysis may use a generative neural network itself. For example, in an embodiment, a neural network is applied to the prompt or prompt + context to classify the prompt, the at least one inference-time parameter is derived from the classification. For example, configuration application 320 may use a prompt such as
"Does the following user input require an output with low variability to answer the question. USER INPUT: {userInput}" or
"Does the following user input require code generation or does it require code debugging to answer the question. USER INPUT: {userInput }", etc.

Based on the answer to questions such as these, parameters such as temperature for the generated output may be set. For example, temperature is typically set lower for debugging than for code generation.

For example, the following prompt may be used: "Does the following user input require business data to answer the question. USER INPUT: {userInput}". If this is answered with yes we assume the temperature for the generated output should be lower than in case the response should not be based on real business data. This approach has been used in a proof of concept, and gave good results. The prompt may be modified in various ways, e.g., "Does the following user input require factual data to answer the question. USER INPUT: {userInput}"
For example, configuration application 320 may be used a neural network to determine an intent of the prompt.

For example, configuration application 320 may determine a semantic distance between a given prompt + context and prompt + context examples with associated parameters. For example, suppose a known set of prompts and/or prompt + context examples, is associated with appropriate inference-time parameters. For each of the known examples, an embedding vector may be computed; e.g., each of the prompts or prompt + context may be mapped to an embedding vector. A new prompt or prompt+context may then also be mapped to an embedding vector. The inference-time parameters of a vector in the known lists that is closest to the new embedding vector may then be used.

Embedding vectors are representations of words, sentences, or even entire paragraphs. An embedding vector may be computed with algorithms such as Word2Vec, GloVe, BERT (Bidirectional Encoder Representations from Transformers), etc.

Embedding vectors may also be used to handle feedback on earlier request. A set may be kept of inputs or intputs+context for which we have feedback, from which we can conclude that an inference-time parameter was too high or too low. If a new request is received, an embedding vector is generated and compared embedding vectors generated for earlier requests. If a close embedding vector is found the corresponding feedback can be applied to the current request. For example, inference-time parameters may be used that are the same as the earlier inference-time parameters associated with the close embedding vector but adjusted based on the feedback.

In an embodiment, inference-time parameters are tuned based on sets of existing data. For example, given a first set of data, say, a code base, inference-time parameters are tuned to optimize regeneration of next tokens in the code base based on part of earlier tokens in the code base. The same can be done for other data sets, e.g., a set of email, a set of images, and so on. When a new request is received it is tested which data set seems to be closest, e.g., which probability distribution defined by the data set seems most likely to produce the request. Closeness may be determined using embedding vectors. For example, one or more embedding vectors may be computed representing a data set, which may be compared to an embedding vector for the request. The inference-time parameters tuned for the most similar data set can now be used to generate the completion.

For example, a data set may comprise human written email. Inference-time parameters are determined in a way to best match the emails generated by an LLMs with the emails in the example set. If a new request appears to be related to this data set, e.g., because it contains a particular keyword, or because its embedding vector is close to an embedding vector of the set.

When later a user create new emails we can increase the initial set. When later a user corrects an LLM generated email we also add to this set.

Dynamic determination of inference-time parameters provides various benefits. Including an enhanced user experience. By dynamically adjusting the parameters of the generative neural network according to the prompt and/or context data, the output can be more relevant and accurate. By using a context data collector and an inference-time parameters calculator, the system can improve the performance of the generative neural network by providing it with the necessary context and parameters, leading to more accurate and relevant outputs. This improves the overall user experience.

Embodiments increase efficiency because it eliminates the need for manual tuning of parameters for each specific use case. This not only saves time and effort but also reduces the possibility of errors due to incorrect parametrization. The system provides flexibility too since parameters do not need to be determined again, each time something in an application changes. Instead, the system may adapt to the customization. In an embodiment, the system learns and adapts over time by using the history of past interactions. This makes the model more intelligent and better equipped to handle complex and diverse user requests.

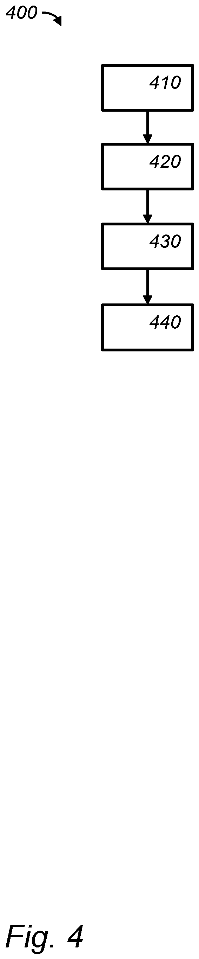

**Figure 4** schematically shows an example of an embodiment of method 400 for dynamic determination of inference-time parameters to control the stochastic generation process of a generative neural network. Method 400 may be computer implemented and comprises
- receiving (410) an inference request for a generative neural network, a stochastic generation process of the generative neural network being controlled by one or more inference-time parameters,
- obtaining (420) operational context information relevant to the inference request,
- dynamically determining (430) for the inference request, at least from the operational context information, at least one of the inference-time parameters,
- causing (440) the generating of output data according to the inference request by the generative neural network and controlled at least by the determined at least one of the inference-time parameters.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

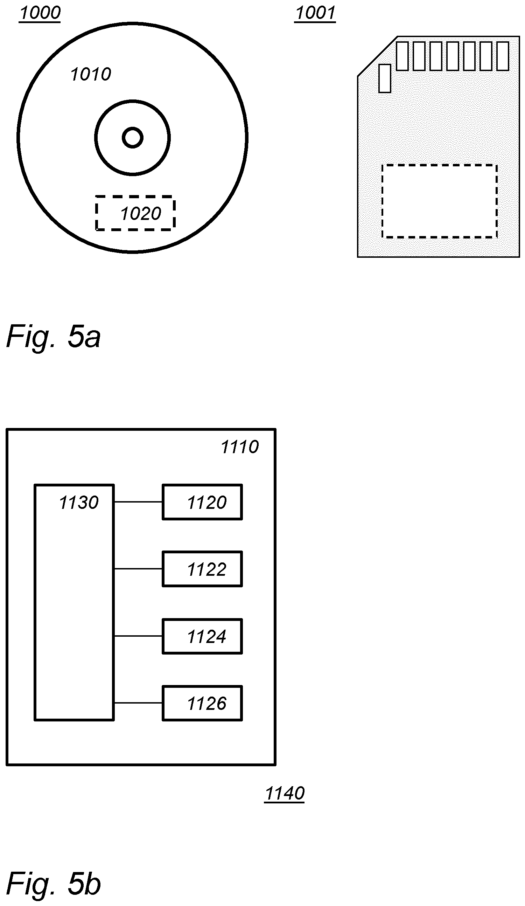

**Figure 5a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for dynamic determination of inference-time parameters according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for dynamic determination of inference-time parameters.

**Figure 5b** shows in a schematic representation of a processor system 1140 according to an embodiment of a device for dynamic determination of inference-time parameters. The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the device for dynamic determination of inference-time parameters may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A computer-implemented method (400) for dynamic determination of inference-time parameters to control the stochastic generation process of a generative neural network, the method comprising
- receiving (410) an inference request for a generative neural network, a stochastic generation process of the generative neural network being controlled by one or more inference-time parameters,
- obtaining (420) operational context information relevant to the inference request,
- dynamically determining (430) for the inference request, at least from the operational context information, at least one of the inference-time parameters,
- causing (440) the generating of output data according to the inference request by the generative neural network and controlled at least by the determined at least one of the inference-time parameters.

2. A method as in Claim 1, wherein the generating of output data by the generative neural network follows a stochastic process, wherein the determined at least one of the inference-time parameters control generation of the output data.

3. A method as in any one of the preceding claims, wherein the generative neural network is applied iteratively to generate the output data, the iterative application of the generative neural network being modulated by the determined at least one of the inference-time parameters.

4. A method as in any one of the preceding claims, wherein the operational context information comprises one or more of:
- an application identifier identifying an application, and/or process context from which the inference request is made,
- a client identifier identifying a user of the application making the inference request,
- an output identifier identifying a destination of the generated output data of the generative neural network,
- a geographic identifier identifying the geographic origin of the inference request and/or a geographic destination of the generated output data of the generative neural network.

5. A method as in any one of the preceding claims, wherein the inference request is one from a particular sequence of inference requests, the operational context information comprising a sequence identifier identifying the particular sequence among a plurality of sequence of inference requests.

6. A method as in any one of the preceding claims, wherein the inference request comprises a prompt for use as input to the generative neural network, the at least one inference-time parameter being derived further from the prompt.

7. A method as in any one of the preceding claims, wherein the inference request comprises a prompt, wherein
- the at least one inference-time parameter is derived from weighting keywords in the prompt, and/or
- a neural network is applied to the prompt to classify the prompt, the at least one inference-time parameter is derived from the classification.

8. A method as in any one of the preceding claims, wherein the generative neural network is a large language model, the inference request being for one of computer code generation, computer code debugging, technical data summarization, technical data-based predictive maintenance, computer network configuration determination, or technical log file-based security vulnerability detection.

9. A method as in any one of the preceding claims, wherein the generative neural network is configured for image generation, the inference request being for one of synthetic training data generation, synthetic test data generation, augmented reality image creation, 2d or 3d image reconstruction.

10. A method as in any one of the preceding claims, wherein a time and/or memory use depend on the determined inference-time parameter, e.g., wherein
- the generative neural network is configured to generate text, the length of the generated text depends on the determined inference-time parameter, or,
- the generative neural network is configured to generate images according to a diffusion model, and a number of diffusion steps depends on the determined inference-time parameter, and/or
- the generative neural network is configured to generate images including iterative upscaling, and a number of upscaling steps depends on the determined inference-time parameter.

11. A method as in any one of the preceding claims, wherein the inference-time parameters comprise one or more of sampling parameters, e.g., a variability control, e.g., selected from: Temperature, Top-k Sampling parameter, Top-p Nucleus Sampling parameter, a classifier-free guidance scale.

12. A method as in any one of the preceding claims, comprising
- obtaining history information of past inference requests relevant to the inference request, the at least one of the inference-time parameters being determined from the history information, the history information comprising a past determined at least one of the inference-time parameters, dynamically determining the at least one of the inference-time parameters being subject to the history information so that the dynamically determined at least one of the inference-time parameters is within a bound of the past determined at least one of the inference-time parameters, and/or
- obtaining configuration information, the at least one of the inference-time parameters being determined from the configuration information, the configuration information setting lower and/or upper limits to the at least one of the inference-time parameters, dynamically determining the at least one of the inference-time parameters being subject to the configuration information, and/or
- obtaining feedback information of past inference requests relevant to the inference request, the at least one of the inference-time parameters being determined from the feedback information, so that the dynamically determined at least one of the inference-time parameters is corrected in a direction conformant with the feedback information.

13. A system comprising: one or more processors; and one or more storage devices storing instructions that, when executed by the one or more processors, cause the one or more processors to perform operations for any one of the preceding claims.

14. A transitory or non-transitory computer storage medium encoded with instructions that, when executed by one or more computers, cause the one or more computers to perform the method according to any one of claims 1-12.
